# EUROPÄISCHE PATENTSCHRIFT

(11) **EP 1 341 862 B1**
(45) Veröffentlichungstag und Bekanntmachung des Hinweises auf die Patenterteilung: **22.06.2005**
(21) Anmeldenummer: 01990383.0
(22) Anmeldetag: 02.11.2001
(51) Int. Cl.: C09J 11/00, C09J 11/06

(54) **HAFTKLEBEMASSE UND IHRE VERWENDUNG**
PRESSURE-SENSITIVE ADHESIVE MASS AND THE USE THEREOF
MASSE AUTOADHESIVE ET SON UTILISATION

(30) Priorität: 10.11.2000 DE 10055942
(43) Veröffentlichungstag der Anmeldung: 10.09.2003
(73) Patentinhaber: tesa AG, 20253 Hamburg (DE)
(72) Erfinder: KRAWINKEL, Thorsten, 22457 Hamburg (DE); FRANCK, Kerstin, 22529 Hamburg (DE); LÜHMANN, Bernd, 22844 Norderstedt (DE)
(86) Internationale Anmeldenummer: PCT/EP2001/012688
(87) Internationale Veröffentlichungsnummer: WO 2002/038692

(56) Entgegenhaltungen:
- EP-A- 0 636 654
- US-A- 5 554 697
- US-A- 5 736 612

## Beschreibung

Die Erfindung betrifft eine Haftklebemasse für ein- und beidseitig haftklebrige Klebfolienstreifen, welche sich durch dehnendes Verstrecken in der Verklebungsebene rückstands- und zerstörungsfrei wiederablösen lassen, und bei denen weder der Untergrund noch der zu verklebende Gegenstand verfärbt wird.

Elastisch oder plastisch hochdehnbare Selbstklebebänder, welche sich durch dehnendes Verstrecken in der Verklebungsebene rückstands- und zerstörungsfrei wiederablösen lassen (nachfolgend auch als stripfähige Selbstklebebänder bezeichnet), sind aus US 4,024,312, DE 33 31 016, WO 92/11332, WO 92/11333, DE 42 22 849, WO 95/06691, DE 195 31 696, DE 196 26 870, DE 196 49 727, DE 196 49 728, DE 196 49 729, DE 197 08 364, DE 197 20 145 und 198 20 858 bekannt.

Eingesetzt werden sie häufig in Form von ein- oder beidseitig haftklebrigen Klebfolienstreifen (Klebebandstreifen, Klebestreifen), welche bevorzugt einen nicht haftklebrigen Anfasserbereich aufweisen, von welchem aus der Ablöseprozess eingeleitet wird. Besondere Anwendungen entsprechender Selbstklebebänder finden sich u. a. in DE 42 33 872, DE 195 11 288, US 5,507,464, US 5,672,402 und WO 94/21157, spezielle Ausführungsformen sind z. B. in DE 44 28 587, DE 44 31 914, WO 97/07172, DE 196 27 400, WO 98/03601 und DE 196 49 636, DE 197 20 526, DE 197 23 177, DE 297 23 198. DE 197 26 375, DE 197 56 084, DE 197 56 816, DE 198 42 864, DE 198 42 865, WO 99/31193, WO 99/37729 und WO 99/63018 beschrieben.

Bevorzugte Einsatzgebiete vorgenannter stripfähiger Klebfolienstreifen beinhalten insbesondere die rückstands- und zerstörungsfrei wiederablösbare Fixierung leichter bis mittelschwerer Gegenstände im Wohn-, Arbeits- und Bürobereich. Sie ersetzen hierbei klassische Befestigungsmittel, wie z. B. Stecknadeln, Pin-Nadeln, Heftzwekken, Nägel, Schrauben, klassische Selbstklebebänder und Flüssigklebstoffe, um nur einige zu nennen. Wesentlich für den erfolgreichen Einsatz o. g. Klebfolienstreifen ist neben der Möglichkeit des rückstands- und zerstörungsfreien Wiederablösens verklebter Gegenstände deren einfache und schnelle Verklebung sowie für die vorgesehene Verklebungsdauer deren sicherer Halt. Hierbei ist insbesondere zu berücksichtigen, dass die Funktionsfähigkeit der Klebestreifen auf einer Vielzahl von Substraten gegeben sein muss, um als Universalfixierung im Wohn-, Arbeits- und Bürobereich dienen zu können.

Obwohl in der oben zitierten Patentliteratur eine breite Palette von Haftklebemassen für die Verwendung in stripfähigen Selbstklebebändern beschrieben werden, so weisen aktuell im Markt befindliche Handelsprodukte (z. B. tesa® Power-Strips®, tesa® Poster-Strips der Beiersdorf AG, 3M Command® Adhesive Klebestreifen der Fa. 3M sowie Plastofix® Formule Force 1000 Klebestreifen der Fa. Plasto S. A.) sämtlichst Haftklebemassen auf Basis von Styrolblockcopolymeren mit im Elastomerblock ungesättigten Polydienblöcken auf. Typischerweise finden lineare oder radiale Blockcopolymere auf Basis von Polystyrolblöcken und Polybutadienblöcken und/oder Polyisoprenblöcken also z. B. radiale Styrol-Butadien- (SB)ₙ und/oder lineare Styrol-Butadien-Styrol- (SBS) und/oder lineare Styrol-Isopren-Styrolblockcopolymere (SIS) Verwendung. Vorteile vorgenannter styrolblockcopolymerbasierender Haftklebemassen für den Einsatz in stripfähigen Selbstklebebändern sind z. B. die mit Ihnen erreichbaren sehr hohen Verklebungsfestigkeiten (bedingt u. a. durch die gleichzeitige Realisierung einer sehr hohe Kohäsion und sehr hoher Klebkräfte), eine ausgeprägte Reduzierung der Haftklebrigkeit beim verstreckenden Ablösen (welches den Ablöseprozess deutlich erleichtert oder gar erst ermöglicht) sowie eine sehr hohe Zugfestigkeit, welche insbesondere für einen reißerfreien Ablöseprozess wesentlich ist.

Bei Verwendung der im Markt befindlichen stripfähigen Selbstklebestreifen, welche Haftklebemassen auf Basis von Styrolblockcopolymeren nutzen, lassen sich auf empfindlichen Untergründen häufig Verfärbungen derselben nachweisen. Diese sind durch die üblicherweise den Haftklebemassen oder deren Rohstoffen zugesetzten Alterungsschutzmittel verursacht. Dabei wird nur der Untergrund verfärbt, während an den Klebestreifen selbst, durch die Verwendung sogenannter nicht verfärbender Alterungsschutzmittel, üblicherweise keine Verfärbungen auftreten.

Besonders ausgeprägt können Untergrundverfärbungen in Erscheinung treten, wenn primäre Antioxidantien auf Basis sterisch gehinderte Phenole eingesetzt werden, insbesondere wenn solche sterisch gehinderter Phenole verwendet werden, welche eine 3-(p-Hydroxyphenyl)-propionsäure Gruppierung oder eine 3-(o-Hydroxyphenyl)-propionsäure Gruppe enthalten. Entsprechende Antioxidantien werden typischerweise zur Stabilisierung von styrolblockcopolymerbasierenden Haftklebemassen bzw. zur Stabilisierung zahlreicher der in entsprechenden Haftklebemassen verwendeten Rohstoffe genutzt. Durch den Einsatz entsprechender Alterungsschutzmittel bereits in vielen der in entsprechenden Haftklebemassen genutzten Rohstoffe durch die Rohstoffhersteller, wie z. B. in zahlreichen Klebharzen oder in vielen Styrolblockcopolymeren selbst, ist die großtechnische Herstellung von Klebmassen, welche frei von entsprechenden Verbindungen sind, im allgemeinen nicht möglich. Gleichzeitig ist sie oft auch nicht erwünscht, da gerade diese Alterungsschutzmittel besonders effektive Antioxidantien darstellen.

Beispiele für zuvor genannte primären Antioxidantien, welche eine 3-(p-Hydroxyphenyl)-propionsäure Gruppierung oder eine 3-(o-Hydroxyphenyl)-propionsäure Gruppe enthalten sind z. B. erhältlich unter den Markennamen Irganox 1010, Irganox 1035, Irganox 1076 der Firma Ciba Additive, Sumilizer BP 101 und Sumilizer BP 76 der Fa. Sumitomo und Hostanox O 10, Hostanox O 16 der Fa. Clariant erhältlich, um nur einige sehr wenige zu nennen.

Ziel der Erfindung war es, einen ein- oder beidseitig haftklebrigen Klebfolienstreifen vorzulegen, welcher als Haftklebemasse eine solche auf Basis von Styrolblockcopolymeren nutzt, welcher sich durch dehnendes Verstrecken im wesentlichen parallel zur Verklebungsebene rückstands- und zerstörungsfrei auch von empfindlichen Untergründen wiederablösen lässt und welcher gleichzeitig auf dem Haftgrund keine oder nur sehr geringe Verfärbungen hervorruft.

Erreicht wird die zuvor beschriebene Zielsetzung durch den zusätzlichen Einsatz spezieller Additive, deren Wirkungsweise wahrscheinlich darauf beruht, das sie derart in den oxidativen Abbauprozess primärer Antioxidantien, speziell solcher Antioxidantien, welche eine 3-(p-Hydroxyphenyl)-propionsäure Gruppierung oder eine 3-(o-Hydroxyphenyl)-propionsäure Gruppe enthalten, eingreifen, dass keine oder nur sehr geringe Mengen an den Untergrund verfärbendende Substanzen gebildet werden. Geeignet als zusätzliche Additive sind primäre Antioxidantien auf Basis von Benzylthioethern, bestimmte Lactone sowie bestimmte Acrylsäurephenylesterderivate, welche nachfolgend noch näher beschrieben werden. Durch den zusätzlichen Einsatz entsprechender spezieller Additive in Haftklebemassen auf Basis von Styrolblockcopolymeren können die sonst häufig beobachteten Verfärbungen, wie sie z. B. besonders auf empfindlichen Untergründen wie weiß gestrichener Raufasertapete auftreten, vollständig oder doch weitestgehend unterdrückt werden. Gleichzeitig ist ein Einfluss auf die mechanischen und klebtechnischen Eigenschaften der Klebemassen nicht nachweisbar.

### Haftklebemassen

Als Haftklebemassen finden bevorzugt solche auf Basis von Blockcopolymeren enthaltend Polymerblöcke gebildet von Vinylaromaten (A-Blöcke), bevorzugt Styrol, und solchen gebildet durch Polymerisation von 1,3-Dienen (D-Blöcke), bevorzugt Butadien und Isopren Anwendung. Sowohl Homo- als auch Copolymerblöcke sind erfindungsgemäß nutzbar. Resultierende Blockcopolymere können gleiche oder unterschiedliche D-Blöcke enthalten, die teilweise, selektiv oder vollständig hydriert sein können. Blockcopolymere können lineare A-D-A Struktur aufweisen. Einsetzbar sind ebenfalls Blockcopolymere von radialer Gestalt sowie sternförmige und lineare Multiblockcopolymere. Als weitere Komponenten können A-D Zweiblockcopolymere vorhanden sein. Blockcopolymere von Vinylaromaten und Isobutylen sind ebenfalls erfindungsgemäß einsetzbar. Sämtliche der vorgenannten Polymere können alleine oder im Gemisch miteinander genutzt werden.

Anstelle der Polystyrolblöcke können auch Polymerblöcke auf Basis anderer aromatenhaltiger Homo- und Copolymere (bevorzugt C-8 bis C-12 Aromaten) mit Glasübergangstemperaturen von > ca. 75°C genutzt werden, wie z.B. α-methylstyrolhaltige Aromatenblöcke. Gleichfalls sind Polymerblöcke auf Basis von (Meth)acrylathomo- und (Meth)acrylatcopolymeren mit Glasübergangstemperaturen von > +75°C nutzbar. Hierbei können sowohl Blockcopolymere zum Einsatz kommen, welche als Hartblöcke ausschließlich solche auf Basis von (Meth)acrylatpolymeren nutzen als auch solche, welche sowohl Polyaromatenblöcke, z. B. Polystyrolblöcke, als auch Poly(meth)acrylatblöcke nutzen.

Anstelle von Styrol-Butadien Blockcopolymeren und Styrol-Isopren Blockcopolymeren und deren Hydrierungsprodukten, mithin Styrol-Ethylen/Butylen Blockcopolymere und Styrol-Ethylen/Propylen Blockcopolymere, können erfindungsgemäß ebenfalls Blockcopolymere und deren Hydrierungsprodukte genutzt werden, welche weitere poiydienhaltige Elastomerblöcke nutzen, wie z. B. Copolymere mehrerer unterschiedlicher 1,3-Diene. Erfindungsgemäß nutzbar sind desweiteren funktionalisierte Blockcopolymere, wie z. B. maleinsäureanhydridmodifizierte oder silanmodifizierte Styrolblockcopolymere.

Typische Einsatzkonzentrationen für die Styrolblockcopolymere liegen im Bereich zwischen 20 Gew.% und 70 Gew.%, bevorzugt im Bereich zwischen 30 Gew.% und 60 Gew.% besonders bevorzugt im Bereich zwischen 35 Gew.% und 55 Gew.%.

Als weitere Polymere können solche auf Basis reiner Kohlenwasserstoffe, z. B. ungesättigte Polydiene, wie natürliches oder synthetisch erzeugtes Polyisopren oder Polybutadien, chemisch im wesentlichen gesättigte Elastomere, wie z. B. gesättigte Ethylen-Propylen-Copolymere, α-Olefincopolymere, Polyisobutylen, Butylkautschuk, Ethylen-Propylenkautschuk sowie chemisch funktionalisierte Kohlenwasserstoffe, wie z. B. halogenhaltige, acrylathaltige oder vinyletherhaltige Polyolefine vorhanden sein, welche die vinylaromatenhaltigen Blockcopolymere bis zu ca. 100 phr bezogen auf das Styrolblockcopolymer ersetzen können.

Erfindungsgemäße Haftklebemassen können chemisch, insbesondere strahlenchemisch (z. B. durch UV-Bestrahlung, γ-Bestrahlung oder durch Bestrahlung mittels schneller Elektronen) vernetzt sein.

Erfindungsgemäße Klebmassen sind optional solche, deren Haftklebrigkeit erst durch thermische oder Lösemittelaktivierung erzeugt wird.

Geeignete Haftklebemassen sind neben den zuvor beschriebenen auf Basis vinylaromatenhaltiger Blockcopolymere all solche, weiche über eine für den Ablöseprozeß ausreichende Reißfestigkeit, Kohäsion und Dehnung verfügen. Entsprechende Haftklebemassen können allein oder in Kombination mit solchen auf Basis vinylaromatenhaltiger Blockcopolymere eingesetzt werden.

Als Klebrigmacher nutzen erfindungsgemäße Haftklebemassen als Hauptkomponente insbesondere Klebharze, die mit dem Elastomerblock der Styrolblockcopolymere verträglich sind. Bevorzugt geeignet sind u. a.: nicht hydrierte, partiell- oder vollständig hydrierte Harze auf Basis von Kolophonium und Kolophoniumderivaten, hydrierte Polymerisate des Dicyclopentadiens, nicht hydrierte, partiell, selektiv oder vollständig hydrierte Kohlenwasserstoffharze auf Basis von C-5, C-5/C-9 oder C-9 Monomerströmen, Polyterpenharze auf Basis von α-Pinen und/oder β-Pinen und/oder δ-Limonen, hydrierte Polymerisate von bevorzugt reinen C-8 und C-9 Aromaten. Vorgenannte Klebharze können sowohl allein als auch im Gemisch eingesetzt werden.

Als weitere Additive können typischerweise Lichtschutzmittel, wie z. B. UV-Absorber, sterisch gehinderte Amine, Antiozonantien, Metalldesaktivatoren, Verarbeitungshilfsmittel, endblockverstärkende Harze, eingesetzt werden.

Plastifizierungsmittel, wie z. B. Flüssigharze, Weichmacheröle oder niedermolekulare flüssige Polymere, wie z. B. niedermolekulare Polyisobutylene mit Molmassen < 1500 g/mol (Zahlenmittel), oder flüssige EPDM-Typen werden typischerweise in geringen Mengen von < ca. 20 Gew.% eingesetzt.

Füllstoffe, wie z.B. Siliziumdioxid, Glas (gemahlen oder in Form von Kugeln), Aluminiumoxide, Zinkoxide, Calciumcarbonate, Titandioxide, Ruße, um nur einige zu nennen, ebenso Farbpigmente und Farbstoffe sowie optische Aufheller können ebenfalls Verwendung finden, um nur einige zu nennen.

### Antioxidantien

Üblicherweise werden styrolblockcopolymerbasierende Haftklebemassen primäre und sekundäre Antioxidantien zugesetzt, um ihre Alterungsstabilität zu verbessern. Primäre Antioxidantien reagieren dabei mit Oxi- und Peroxiradikalen, die sich in Gegenwart von Sauerstoff bilden können, und reagieren mit diesen zu weniger reaktiven Verbindungen. Sekundäre Antioxidantien reduzieren z.B. Hydroperoxide zu Alkoholen. Bekanntermaßen besteht ein synergistischer Effekt zwischen primären und sekundären Alterungsschutzmitteln, so dass der Schutzeffekt einer Mischung häufig größer ist als die Summe der beiden Einzeleffekte. Standardmäßig in Haftklebemassen auf Basis von Styrolblockcopolymeren eingesetzte primäre Antioxidantien sind sehr häufig sterisch gehinderte Phenole, welche eine 3-(p-Hydroxyphenyl)-propionsäure Gruppierung oder eine 3-(o-Hydroxyphenyl)-propionsäure Gruppe tragen, wie z.B. Irganox 1010, Irganox 1076, Irganox 259, Irganox 1035 und Irganox 1135 der Firma Ciba Additive, Sumilizer BP 101 und Sumilizer BP 76 der Fa. Sumitomo oder Hostanox O 10 und Hostanox O 16 der Fa. Clariant, Anox 20 der Firma Eni Chem Sintesis oder Lowinox PP 35 und Lowinox PO 35 der Fa. Chemische Werke Lowi um nur einige zu nennen.

Beim Einsatz von Antioxidantien insbesondere vorgenannter Art kann es zu roten Verfärbungen des Untergrundes kommen, speziell bei z. B. Verklebung auf mit Dispersions- oder Latexfarbe gestrichener Tapete oder entsprechend gestrichenen Wänden.
Vorgenannte Verfärbungen treten bevorzugt am Rand des Klebestreifens auf, was auf die Wechselwirkung mit Luftsauerstoff schließen lässt. Es fällt auf, dass die Klebestreifen selbst nicht sichtbar verfärben, sondern lediglich der Untergrund, auf dem diese verklebt sind.

Bei sämtlichen der vorgenannten Antioxidantien handelt es sich um Typen, die als nicht verfärbend ausgelobt werden.

Damit der Untergrund durch die Antioxidantien oder deren Abbauprodukte rot verfärbt werden kann, müssen diese zunächst aus dem Klebestreifen in den Untergrund diffundieren. Aus diesem Grund ist verständlich, dass die Verfärbung des Untergrundes selbst stark von der Verträglichkeit der Klebemassen mit den Antioxidantien bzw. deren Abbauprodukten und damit von der Art der eingesetzten Styrolblockcopolymere, Klebharze und sonstiger Additive abhängt.

Bei dauerhaften Verklebungen treten die genannten Verfärbungen in der Praxis häufig nicht störend in Erscheinung, da sie im Allgemeinen nicht sichtbar sind. Erst die Verwendung von wiederablösbaren Klebestreifen lässt die Verfärbungen problematisch erscheinen, wenn nach dem Ablösen mehr oder weniger stark ausgeprägte rote Ränder um die ehemalige Verklebungsfläche auftreten. Eine weitere entscheidende Einflussgröße auf die Verfärbungsneigung hat die Verklebungsdauer: je länger ein Klebestreifen mit einer Oberfläche in Kontakt steht, desto größer kann auch die Verfärbung des Untergrundes im Kontaktbereich der Verklebung sein.

Für die angenommene Reaktion mit dem Sauerstoff der Luft müssen die Antioxidantien oder deren Folgeprodukte in die Substratoberfläche migrieren. Dieses geschieht bevorzugt, wenn die Elastomere und Harze recht unpolar sind, die typischerweise polareren Antioxidantien damit eine geringere Löslichkeit in der Klebemasse aufweisen. Die beobachteten Verfärbungen treten jedoch nachweisbar auch im Falle von Klebmassen auf, welche polare Harze, z. B. Kolophoniumester enthalten. Da Sauerstoff bevorzugt am Rand des Klebestreifens einwirken kann, entsteht hier auch die erste sichtbare Verfärbung, die schon nach wenigen Tagen bis einigen Wochen sichtbar werden kann.

Verfärbungen treten verstärkt auf bei Anwendung der Klebestreifen auf sehr rauen Untergründen, z. B. auf von mit acrylathaltiger Dispersionsfarbe gestrichener Raufasertapete. Durch die groben Unebenheiten der Tapetenoberfläche und die hierdurch bedingte unvollständige Verklebung kann Luftsauerstoff auch in die nicht verklebten Zwischenräume zwischen Klebestreifen und Haftgrund gelangen, so dass Verfärbungen besonders deutlich hervortreten.

Die einfachste Möglichkeit, die Rotverfärbung zu unterdrücken besteht im Verzicht auf Antioxidantien, insbesondere auf die oben beschriebenen sterisch gehinderten Phenole, insbesondere im Verzicht auf sterisch gehinderte Phenole, welche eine 3-(p-Hydroxyphenyl)-propionsäure Gruppierung oder eine 3-(o-Hydroxyphenyl)-propionsäure Gruppe enthalten. Da entsprechende Antioxidantien jedoch standardmäßig in einer großen Anzahl von Rohstoffen von Herstellerseite verwendet werden, ist ein entsprechender Verzicht in der Praxis zumeist nicht möglich. Die Rotverfärbung muss daher durch Einsatz von weiteren Zusatzstoffen beeinflusst werden.

Überraschenderweise zeigt sich, dass eine Möglichkeit die Rotverfärbung von empfindlichen Untergründen zu unterdrücken, der zusätzliche Einsatz spezieller Additive ist, welche selbst als Alterungs- bzw. Verarbeitungsschutzmittel bekannt sind. Drei Gruppen von Additiven sind in der Lage die Rotverfärbung zu verhindern oder doch stark zu reduzieren. Bei einer ersten Gruppe handelt es sich um sterisch gehinderte Ein- und/oder Mehrkernphenole, die in Ortho- und/oder Parastellung zur phenolischen OH-Gruppe eine Benzylthioethergruppierung enthalten. Erfindungsgemäß einsetzbar sind Einkernphenole und Mehrkemphenole. Bevorzugt geeignet sind 4,6-bis (Octylthiomethyl)-o-Cresol und 4,6-bis(Dodecylthiomethyl)-o-Cresol, Einkernphenole, wie sie z. B. von der Fa. Ciba Additive unter dem Markennamen Irganox 1520 bzw. Irganox CGX AO 726 angeboten werden. Ein weiteres bevorzugt geeignetes Produkt, welches aus einem Gemisch von Ein- und Mehrkemphenolen besteht, vertreibt die Firma Goodyear unter dem Namen Wingstay K. Als zweite Gruppe sind erfindungsgemäß sterisch gehinderte Phenole geeignet, welche eine Acrylsäurephenylestergruppe in Ortho- und/oder Parastellung zur phenolischen OH-Gruppe tragen. Als bevorzugt geeignet zeigen sich 2-tert-Butyl-6-(3-tert-butyl-2-hydroxy-5-methylbenzyl)-4-methylphenylacrylat und 2-[1-(2-Hydroxy-3,5-di-tert-pentylphenyl)ethyl]-4, 6-di-tert-pentylphenylacrylate, welche von der Fa. Sumitomo unter den Markenbezeichnungen Sumilizer GM und Sumilizer GS angeboten werden. Ein zum Sumilizer GM chemisch identisches Produkt ist von der Fa. Ciba Additive unter der Bezeichnung Irganox 3052 erhältlich. Vorgenannte Produkte wirken selbst nicht vornehmlich als primäre Antioxidantien, sondern als C-Radikalfänger. Die dritte Möglichkeit, durch Zugabe von Alterungsschutzmitteln eine Verringerung der Rotverfärbung zu erreichen, besteht in der Zugabe von sterisch gehinderten Lactonen, substituierte Verbindungen mit dem Grundgerüst 3-Phenyl-3H-benzofuran-2-on. Bevorzugt geeignet ist das Reaktionsprodukt von 3-Hydroxy-5,7-di-tert.butyl-furan-2-on mit o-Xylol, wie es die Fa. Ciba Additive unter dem Namen HP 136 vertreibt.

Da nur sehr geringe Mengen der o. g. Additive für eine effektive Unterdrückung der beschriebenen Effekte benötigt werden, werden die Haftklebeeigenschaften der Klebmassen kaum beeinflusst. Schon 0,25 Teile eines dieser o.g. Zusatzstoffe bewirkt eine deutliche Reduzierung der Verfärbungsneigung. Um die Verfärbungsneigung in einem Test deutlich sichtbar werden zu lassen, wurden für die Untersuchungen Bedingungen gewählt, die schon nach kurzer Zeit eine Verfärbung begünstigen. Dieses sind einerseits erhöhte Temperaturen (+40°C) und die Auswahl der Farbe, auf der die Verfärbungsneigung geprüft wird. Durch die Lagerung in einem Umlufttrockenschrank ist auch die Menge an Sauerstoff, die an die Grenzfläche von Klebestreifen und Tapete gelangt sehr hoch. Eine Verfärbung wird dann als sichtbar eingestuft, wenn ein kleiner roter Rand bei genauem Hinsehen beobachtet werden kann. Zu diesem Zeitpunkt würde einem Verwender noch keine Verfärbung auffallen.

Bei der Auswahl der Rohstoffe für die Verhinderung einer Verfärbung darf nicht übersehen werden, dass die für die Verfärbung verantwortlichen Antioxidantien (sterisch gehinderte Phenole) schon zu einem Anteil von bis zu ca. 0,4% in den eingesetzten Rohstoffen vorhanden sein können. Daraus erklärt sich auch, warum eine Verfärbung der Tapete durch die Klebestreifen auch dann auftritt, wenn keine zusätzlichen Antioxidantien zugegeben werden (Beispiel A1). Aus dem Beispielen A2 bis A5 lässt sich erkennen, dass tatsächlich die sterisch gehinderten Phenole (in diesem Fall Irganox 1010 bzw. Irganox 1076) für die Verfärbung verantwortlich sind. Ein Einfluss der sekundären Antioxidantien (Beispiele A3 und A4) konnte dagegen nicht beobachtet werden.

Die Unterdrückung der Verfärbung gelingt wie in den Beispielen A6 bis A8 gezeigt mit unterschiedlichen Phenolen, die in Ortho- und/oder Parastellung alkylthiomethylsubstituiert sind, die eine Verfärbung um das 4 bis 5-fache hinauszögern können. Da die Verfärbungen bei normaler Anwendung im Innenraum erst nach einigen Monaten auftreten, ist durch diese Verbesserung eine sichere Anwendung bis zu über einem Jahr möglich. Reversible Verklebungen, denn nur bei solchen ist eine Unterdrückung der Rotverfärbung sinnvoll, werden typischerweise spätestens nach einem Jahr gelöst. Auch die Anwendung von sterisch gehinderten Phenole mit einer Acrylatgruppe, jeweils in Ortho- und Parastellung zu OH- oder Acrylat-Gruppe substituierte Verbindungen mit dem Grundgerüst 2-(2-Hydroxyphenylmethyl)-propensäureester, die als C-Radikalfänger wirken verringern die Verfärbungsneigung (Beispiel A9). Die Beispiele A10 und A11 zeigen, dass die Menge an zusätzlichem Alterungsschutzmittel entscheidend für die Unterdrückung der Verfärbungsneigung verantwortlich ist. Die entfärbende Wirkung erhöht sich mit der Menge an zusätzlichen Alterungsschutzmitteln. Beispiel A12 zeigt die entfärbende Wirkung von sterisch gehinderten Lactonen, substituierten Verbindungen mit dem Grundgerüst 3-Phenyl-3H-benzofuran-2on die als C-Radikalfänger dienen. Bei dieser Verbindungsklasse ist die entfärbende Wirkung am stärksten ausgeprägt.

### Herstellung der Haftklebemassen

Die Herstellung und Verarbeitung der Haftklebemassen kann aus Lösung, Dispersion sowie aus der Schmelze erfolgen. Bevorzugte Herstell- und Verarbeitungsverfahren erfolgen aus Lösung sowie aus der Schmelze. Besonders bevorzugt ist die Fertigung der Klebmasse aus der Schmelze. Für den letzteren Fall umfassen geeignete Herstellprozesse sowohl Batchverfahren als auch kontinuierliche Verfahren. Besonders bevorzugt ist die kontinuierliche Fertigung der Haftklebemasse mit Hilfe eines Extruders.

Erfindungsgemäße Haftklebemassen können sowohl für einschichtige durch dehnendes Verstrecken rückstands- und zerstörungsfrei wiederablösbare Selbstklebebänder (z. B. entsprechend DE 33 31 016 C2 oder DE 42 22 849 C1 oder WO 98/03601) als auch für mehrschichtige Selbstklebebänder ohne oder mit Schaumstoffzwischenträger (z. B. entsprechend DE 197 08 366 oder DE 198 20 858 oder WO 92/11333 oder DE 196 49 727 oder DE 196 49 728 oder DE 196 49 729 oder DE 197 20 145 oder US 5,516,581 oder WO 95/06691) verwendet werden. Im Falle der Verwendung in mehrschichtigen Selbstklebebändern entsprechend DE 197 08 366 bilden erfindungsgemäße Haftklebemassen die Außenschichten der Klebestreifen. Ein Vorteil der Verwendung mehrschichtiger Produktaufbauten entsprechend DE 197 08 366 besteht in der Möglichkeit durch geeignete Rezeptierung der inneren Klebstoffschichten z. B. die Stripkräfte weitestgehend unabhängig von den Klebeigenschaften zu steuern. Klebestreifen können entsprechend DE 44 28 587 C2 und US 5,925,459 ausgeformt bzw. gemäß DE 44 31 914 C2 modifiziert sein. Erfindungsgemäße Haftklebemassen können ebenfalls in Produkten entsprechend DE 43 39 604 C2 genutzt werden.

### Beidseitig / einseitig haftklebrige Selbstklebebänder

Erfindungsgemäße Haftklebemassen können sowohl für einseitig als auch für beidseitig haftklebrige durch dehnendes Verstrecken rückstandsfrei und zerstörungsfrei wiederablösbare Selbstklebebänder genutzt werden. Einseitig haftklebrige Selbstklebebänder können hierbei z. B. durch einseitige Inertisierung zuvor genannter beidseitig haftklebriger Selbstklebebänder bzw. Selbstklebestreifen erhalten sein.

### Konfektionierung

Typische Konfektionierformen von die erfindungsgemäßen Haftklebemassen nutzenden Selbstklebebändern sind Klebebandrollen sowie Klebestreifen, wie sie z. B. in Form von Stanzlingen erhalten werden. Optional enthalten Stanzlinge einen nicht haftklebrigen Anfasserbereich, von welchem aus der Ablöseprozess ausgeführt werden kann.

### Prüfmethoden

### Bestimmung der Verfärbungsneigung

Zur Herstellung der Probekörper werden die zu untersuchenden, beidseitig haftklebrigen Klebfolienstreifen (Abmessungen: 20 mm x 50 mm) auf eine Spanholzplatte, welche mit gestrichener Raufasertapete verklebt ist (Tapete = Erfurt Körnung 52, Farbe = Herbol Zenit LG) fixiert. Die Rückseite der Klebestreifen ist nicht abdeckt. Die Platten mit den auf ihnen fixierten Klebestreifen werden anschließend bei 40°C im Umlufttrockenschrank im Dunkeln gelagert. Im Abstand von jeweils einer Woche wird ein Klebestreifen durch Schälen oder Verstrecken in Richtung der Verklebungsebene vom Tapetenuntergrund abgelöst und die Tapete nachfolgend auf Verfärbungen untersucht.

### Zugfestigkeit II maximale Dehnung

Messungen erfolgen, wenn nicht anders vermerkt, in Anlehnung an DIN 53504 mit Verwendung von Schulterstäben der Größe S3 sowie bei einer Separationsgeschwindigkeit von 300 mm/min.

### Ablösekraft (Stripkraft; Stripspannung)

Zur Ermittlung der Ablösekraft (Stripkraft) wird eine Klebstoff-Folie der Abmessungen 50 mm * 20 mm (Länge * Breite), mit am oberen Ende nicht haftklebrigem Anfasserbereich, zwischen zwei Stahlplatten (deckungsgleich zueinander angeordnet) der Abmessungen 50 mm x 30 mm, entsprechend dem unter "Kippscherfestigkeit (Kippscherstandzeit)" beschriebenen Vorgehen, jedoch mit Anpressdrucken von jeweils 500 N, verklebt. Die Stahlplatten tragen an ihrem unteren Ende je eine Bohrung zur Aufnahme eines S-förmigen Stahlhakens. Das untere Ende des Stahlhakens trägt eine weitere Stahlplatte, über welche die Prüfanordnung zur Messung in der unteren Klemmbacke einer Zugprüfmaschine fixiert werden kann. Die Verklebungen werden 24 h bei +40°C gelagert. Nach Rekonditionierung auf RT wird der Klebfolienstreifen mit einer Zuggeschwindigkeit von 1000 mm/min parallel zur Verklebungsebene und kontaktfrei zu den Kantenbereichen der beiden Stahlplatten, herausgelöst. Dabei wird die erforderliche Ablösekraft in N gemessen. Angegeben wird der Mittelwert der Stripspannung (in N/mm²) in dem Bereich in welchem der Klebestreifen zwischen 10 mm und 40 mm von den Stahluntergründen abgelöst ist.

### Schälfestigkeit

Zur Ermittlung der Schälfestigkeit werden die zu untersuchenden Haftklebestreifenmuster einseitig vollflächig mit einer 23 µm starken PETP-Folie (Hostaphan RN 25; Mitsubishi Chemicals) luftblasenfrei einkaschiert, danach die zweite Klebfolienstreifenseite an einem Ende mit einem ca. 6 mm langen Folienstreifen (ebenfalls Hostaphan RN 25) abgedeckt, so dass an diesem Ende ein beidseitig nicht haftklebriger Anfasserbereich entsteht. Hiemach wird der zu prüfende Klebfolienstreifen vorderseitig, mit leichtem Fingerandruck auf den Prüfuntergrund (gestrichene Raufasertapete: Tapete = Erfurt Körnung 52, Farbe = Herbol Zenit LG, Tapete verklebt auf Presspanplatte) aufgeklebt. Muster werden anschließend 10 s lang bei einem Anpressdruck von 90 N pro 10 cm² Haftklebefläche angedrückt, danach 15 Minuten bei 40°C konditioniert. Die Prüfplatten werden anschließend horizontal fixiert, so dass der anfassbare Bereich der Klebestreifen nach unten gerichtet ist. An den nicht klebenden Anfasser wird mit Hilfe einer Klemme (20 g) ein Gewicht von 20 g befestigt, so dass die entstehende Schälbelastung (ca. 0.7 N pro 20 mm Klebestreifenbreite) orthogonal zur Verklebungsebene wirkt. Nach 15 Minuten und nach 24 h wird diejenige Strecke markiert, die der Klebestreifen vom Verklebungsuntergrund seit Versuchsbeginn abgeschält ist. Der Abstand zwischen beiden Markierungen wird als Schälweg (Einheit: mm pro 24 h) angegeben.

### Kippscherfestigkeit (Kippscherstandzeit)

Zur Bestimmung der Kippscherfestigkeit wird die zu prüfende Klebstoff-Folie der Abmessung 20 mm x 50 mm, welche an einem Ende beidseitig mit einem nicht haftklebrigen Anfasserbereich versehen ist (erhalten durch Aufkaschieren von 25 µm starker biaxial verstreckter Polyesterfolie der Abmessungen 20 mm x 13 mm (Hostaphan RN 25)), mittig auf eine hochglanzpolierte quadratische Stahlplatte der Abmessung 40 mm x 40 mm x 3 mm (Länge x Breite x Dicke) verklebt. Die Stahlplatte ist rückseitig mittig mit einem 10 cm langen Stahlstift versehen, welcher vertikal auf der Plattenfläche sitzt. Die erhaltenen Probekörper werden mit einer Kraft von 100 N auf den zu prüfenden Haftgrund verklebt (Andruckzeit = 5 sec) und 5 min im unbelasteten Zustand belassen. Nach Beaufschlagung der gewählten Kippscherbelastung durch Anhängen eines Gewichtes (10 N bei 50 mm Hebelarm) wird die Zeit bis zum Versagen der Verklebung (= Kippscherstandzeit) ermittelt.

### Herstellung der Prüfkörper

### Herstellung der Haftklebestreifen

Haftklebemassen werden in einem heizbaren Kneter mit Sigma-Schaufel (Werner & Pfleiderer LUK 1,0 K3 ausgerüstet mit einem Thermostaten LTH 303 der Fa. mgw LAUDA) bei einer Temperatur von ca. +160 bis +180°C und unter Inertisierung mit CO₂ als Schutzgas zu einer homogenen Mischung verarbeitet. Nach dem Erkalten werden durch ca. zehnminütiges Verpressen der Klebmasse bei +120°C bis +140°C (temperierbare Presse: Typ KHL 50 der Fa. Bucher-Guyer) einschichtige Klebstoff-Folienstücke der Dicke 700µm ± 50µm (Mittelwert ± 2-fache Standardabweichung) hergestellt. Einschichtige Haftklebestreifen der gewünschten Abmessungen werden durch Ausstanzen erhalten. Im Falle der Herstellung mehrschichtiger Haftkiebestreifen werden die entsprechenden Schichten zuvor durch Kaschierung (ggf. durch Heißkaschierung) erhalten und danach die Klebestreifen durch Ausstanzen vereinzelt.

### Beispiele

Da die Verfärbungsneigung im Falle von Haftklebemassen basierend auf hydrierten Rohstoffen, wahrscheinlich in Folge der schlechteren Löslichkeit der Antioxidantien in selbigen, besonders stark hervortreten, wird ein entsprechendes System, wie im Folgenden beschrieben, als Basisrezeptur ausgewählt.

### Grundrezeptur A:

20 Tle Kraton G 1650 (SEBS reiner Dreiblock)
30 Tle Kraton G 1657 (SEBS mit Zweiblockgehalt)
50 Tle Regalite R 1100 (hydriertes Kohlenwasserstoffharz)

| Beispiel Nr. | Alterungsschutzmittel | Anteil |
|---|---|---|
| Beispiel A1 | Ohne zusätzliches Alterungsschutzmittel (Materialien, wie vom Hersteller erhalten eingesetzt) | |
| Beispiel A2 | Irganox 1010 | 0,5 |
| Beispiel A3 | Irganox 1010, | 0,5 |
| | Irgafos TNPP | 0,5 |
| Beispiel A4 | Irganox 1010, | 0,5 |
| | Sandostab PEPQ | 0,5 |
| Beispiel A5 | Irganox 1076 | 0,5 |
| | Irgafos TNPP | 0,5 |
| Beispiel A6 | Irganox 1520 | 0,5 |
| | Irgafos TNPP | 0,5 |
| Beispiel A7 | Irganox CGX AO 726 | 0,5 |
| | Irgafos TNPP | 0,5 |
| Beispiel A8 | Wingstay K | 0,5 |
| | Irgafos TNPP | 0,5 |
| Beispiel A9 | Irganox 3052 | 0,5 |
| | Irgafos TNPP | 0,5 |
| Beispiel A10 | Irganox 3052 | 0,25 |
| | Irgafos TNPP | 0,25 |
| Beispiel A11 | Irganox 3052 | 1,0 |
| | lrgafos TNPP | 1,0 |
| Beispiel A12 | Irganox 1010 | 0,25 |
| | HP 136 | 0,5 |

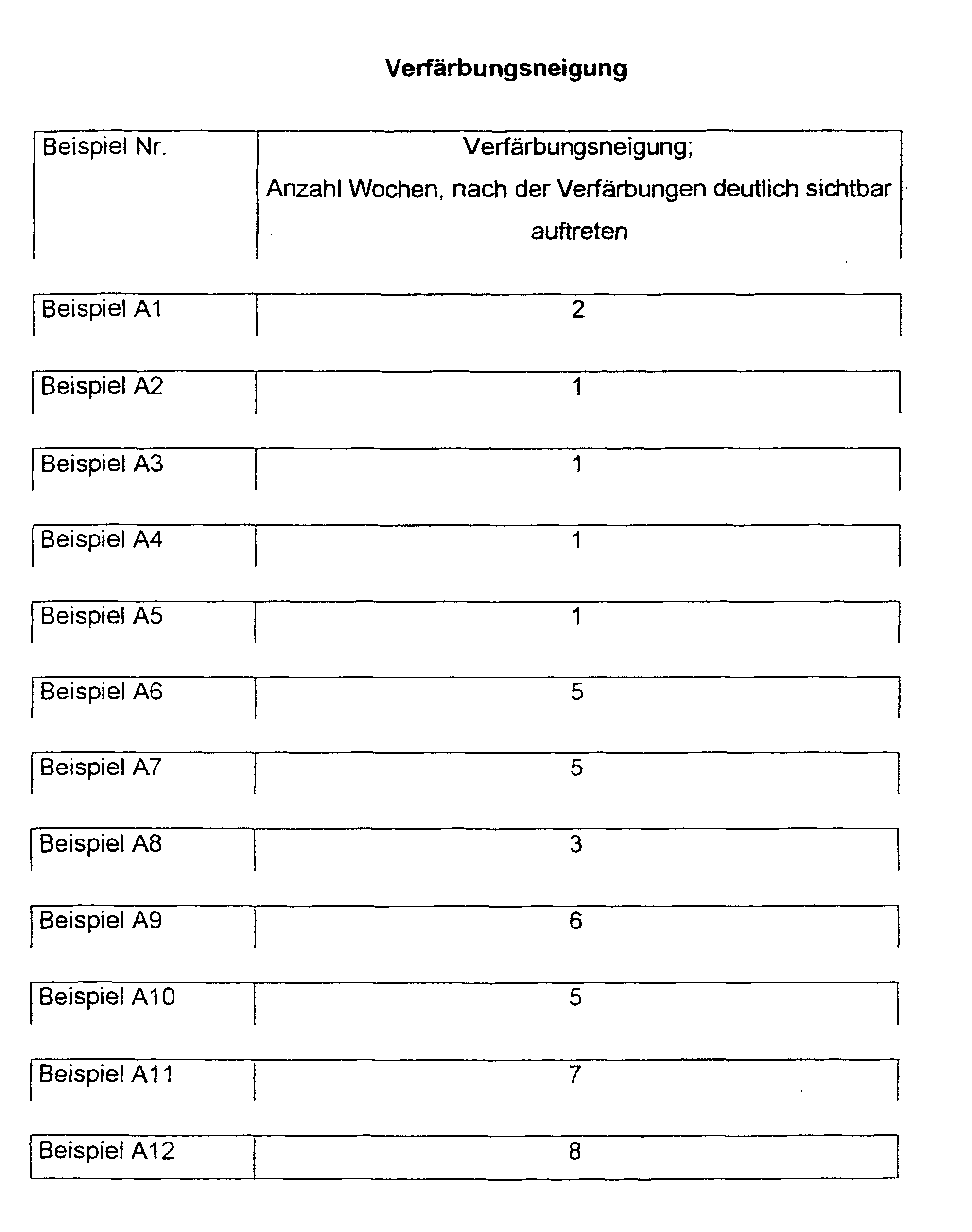

### Mechanische und klebtechnische Daten

Aus den folgenden mechanischen und klebtechnischen Daten kann ersehen werden, dass eine Zugabe von geringen Mengen an Antioxidantien keinen Einfluss auf die Verklebungsleistung und die für die Anwendung wichtigen mechanischen Eigenschaften hat.

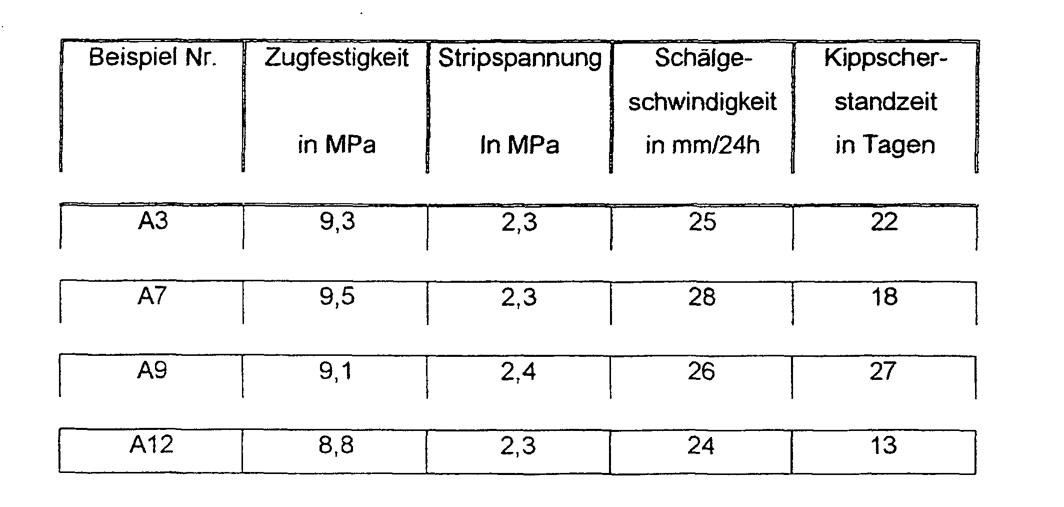

Zum Nachweis, dass dieser Effekt auch bei nicht hydrierten Styrolblockcopolymeren auftritt, folgen einige Beispiele mit Klebmassen auf Basis von SIS und hydrierten Kolophoniumharzen.

### Grundrezeptur B

50 Tle Vector 4211 (SIS mit reinem Dreiblock)
50 Tle Foral 105 (hydriertes Kolophoniumharz)

| Beispiel Nr. | Alterungsschutzmittel | Anteil |
|---|---|---|
| Beispiel B1 | Ohne zusätzliches Alterungsschutzmittel | |
| Beispiel B2 | Irganox 1010, | 0,5 |
| | Irgafos TNPP | 0,5 |
| Beispiel B3 | Irganox 1010, | 0,5 |
| | Irganox CGX AO 726 | 0,5 |
| | Irgafos TNPP | 0,5 |
| Beispiel B4 | Irganox CGX AO 726 | 0,5 |
| | Irgafos TNPP | 0,5 |
| Beispiel B5 | Irganox CGX AO 726 | 0,5 |
| | Irgafos TNPP | 0,5 |
| Beispiel B6 | Irganox 3052 | 0,5 |
| | Irgafos TNPP | 0,5 |
| Beispiel B 7 | Irganox 1010 | 0,25 |
| | HP 136 | 0,5 |

| **Verfärbungsneigung;** | |
|---|---|
| Beispiel Nr. | Verfärbungsneigung; |
| | Anzahl Wochen, nach der Verfärbungen deutlich sichtbar auftreten |
| Beispiel B1 | 5 |
| Beispiel B2 | 3 |
| Beispiel B3 | 6 |
| Beispiel B4 | Keine Verfärbung nach 12 Wochen |
| Beispiel B5 | Keine Verfärbung nach 12 Wochen |
| Beispiel B6 | Keine Verfärbung nach 12 Wochen |
| Beispiel B7 | Keine Verfärbung nach 12 Wochen |

Die Verfärbungsneigung ist in den im Vergleich zu Grundrezeptur A deutlich polareren Klebmassen, wahrscheinlich bedingt durch die bessere Löslichkeit der Antioxidantien in der Haftklebemasse, wesentlich reduziert. Eine Reduzierung der Untergrundverfärbung wird durch die gleichen Alterungsschutzmittel erreicht, wie sie in Grundrezeptur A positiv getestet wurden.

## Patentansprüche

1. Einseitig oder beidseitig klebende Klebfolienstreifen, der durch dehnendes Verstrecken in der Verklebungsebene wieder ablösbar ist, enthaltend eine Haftklebemasse enthaltend
a) Blockcopolymer
b) Klebharze und
c) Antioxidans
mit einem Gehalt an
d) sterisch gehindertem Ein- und/oder Mehrkemphenol, das in Ortho- und/oder Parastellung zur phenolischen OH-Gruppe eine Benzylthioethergruppierung enthält, und/oder
e) sterisch gehindertem Phenol, welches eine Acrylsäurephenylestergruppe in Ortho- und/oder Parastellung zur phenolischen OH-Gruppe trägt, und/oder
f) sterisch gehindertem Lacton.

2. Verwendung nach Anspruch 1, **dadurch gekennzeichnet, dass** das Ein- und/oder Mehrkemphenol d) 4,4-bis(Alkylthiomethyl)-o-Cresol, bevorzugt 4,6-bis(Octylthiomethyl)-o-Cresol oder 4,6-bis(Dodecylthiomethyl)-o-Cresol ist.

3. Verwendung nach Anspruch 1, **dadurch gekennzeichnet, dass** das Phenol e) 2-tert-Butyl-6-(3-tert-butyl-2-hydroxy-5-methyl-benzyl)-4-methoxyphenylacrylat oder 2-[1-(2-Hydroxy-3,5-di-tert-pentylphenyl)ethyl]-4,6-di-tert-pentylphenylacrylat ist.

4. Verwendung nach Anspruch 1, **dadurch gekennzeichnet, dass** das Lacton f) eine substituierte Verbindung mit dem Grundgerüst 3-Phenyl-3H-benzofuran-2-on ist, insbesondere das Reaktionsprodukt von 3-Hydroxy-5,1-di-tert-butyl-furan-2-on, mit o-Xylol.

5. Verwendung nach einem der Ansprüche 1 - 4, **dadurch gekennzeichnet, dass** die Komponenten d), e) und f) insgesamt in einer Menge von 0,01 bis 3,0 Gewichtsteilen, bezogen auf 100 Gewichtsteile der gesamten Haftklebemasse vorliegen, insbesondere von 0,02 bis 1,0.

6. Verwendung nach einem der Ansprüche 1 - 5, **dadurch gekennzeichnet, dass** das Blockcopolymer a) in einer Menge von 30 bis 65, insbesondere von 35 bis 60, das Klebharz b) von 35 bis 70, insbesondere von 40 bis 65, und das Antioxidans c) von 0 bis 2,5, insbesondere von 0,05 bis 1,5 vorliegt, alles in Gewichtsteilen bezogen auf 100 Gewichtsteile der gesamten Haftklebemasse.

7. Verwendung nach einem der Ansprüche 1 - 6, **dadurch gekennzeichnet, dass** das Blockcopoylmer a) Polymerblöcke gebildet von Vinylaromaten (A-Blöcke), insbesondere Styrol, und solchen gebildet durch Polymerisation von 1,3-Dienen (D-Blöcke), insbesondere Butadien und/oder Isopren und/oder deren Hydrierungsprodukten enthält.

8. Verwendung nach einem der Ansprüche 1 - 7, **dadurch gekennzeichnet, dass** das Antioxidans c) ein primäres und/oder sekundäres Antioxidans ist, insbesondere ein sterisch gehindertes Phenol mit einer 3-(p-Hydroxyphenyl)-propionsäure-Gruppe oder einer 3-(o-Hydroxyphenyl)-propionsäure-Gruppe.

9. Verwendung nach einem der Ansprüche 1 - 8, **dadurch gekennzeichnet, dass** die Haftklebemasse weitere Additive enthält, insbesondere Lichtschutzmittel, Antiozonantien, Metalldesaktivatoren, Verarbeitungshilfsmittel, endblockverstärkende Harze, Plastifizierungsmittel, Füllstoffe, Farbpigmente, Farbstoffe und/oder optische Aufheller.

## Claims

1. Single-sidedly or double-sidedly adhering adhesive sheet strip redetachable by extensive stretching in the bond plane, comprising a pressure sensitive adhesive comprising
a) block copolymer
b) tackifier resins, and
c) antioxidant
having the presence therein of
d) sterically hindered monocyclic and/or polycyclic phenol containing a benzyl thioether group positioned ortho and/or para to the phenolic OH group, and/or
e) sterically hindered phenol which carries an acrylic acid phenyl ester group positioned ortho and/or para to the phenolic OH group, and/or
f) sterically hindered lactone.

2. Use according to Claim1, **characterized in that** the monocyclic and/or polycyclic phenol d) is 4,4-bis(alkylthiomethyl)-o-cxesol, preferably 4,6-bis(octylthiomethyl)-o-cresol or 4,6-bis(dodecylthiomethyl)-o-cresol.

3. Use according to Claim 1, **characterized in that** the phenol e) is 2-tert-butyl-6-(3-tert-butyl-2-hydroxy-5-methylbenzyl)-4-methoxyphenyl acrylate or 2-[1-(2-hydroxy-3,5-di-tert-pentylphenyl)ethyl]-4,6-di-tert-pentylphenyl acrylate.

4. Use according to Claim 1, **characterized in that** the lactone f) is a substituted compound with the 3-phenyl-3H-benzofuran-2-one parent structure, in particular the reaction product of 3-hydroxy-5,7-di-tert-butyl-furan-2-one with o-xylene.

5. Use according to one of Claims 1 - 4, **characterized in that** components d), e) and f) are present in total in an amount of 0.01 to 3.0 parts by weight based on 100 parts by weight of the overall pressure sensitive adhesive, in particular of 0.02 to 1.0.

6. Use according to one of Claims 1 - 5, **characterized in that** the block copolymer a) is present in an amount of 30 to 65, in particular from 35 to 60, the tackifier resin b) from 35 to 70, in particular from 40 to 65, and the antioxidant c) from 0 to 2.5, in particular from 0.05 to 1.5, all in parts by weight based on 100 parts by weight of the overall pressure sensitive adhesive.

7. Use according to one of Claims 1 - 6, **characterized in that** the block copolymer a) comprises polymer blocks formed from vinyl aromatics (A blocks), especially styrene, and those formed by polymerization of 1,3-dienes (D blocks), especially butadiene and/or isoprene and/or hydrogenation products thereof.

8. Use according to one of Claims 1 - 7, **characterized in that** the antioxidant c) is a primary and/or secondary antioxidant, in particular a sterically hindered phenol containing a 3-(p-hydroxyphenyl)propionic acid group or a (3-(o-hydroxyphenyl)propionic acid group.

9. Use according to one of Claims 1- 8 , **characterized in that** the pressure sensitive adhesive comprises further additives, especially light stabilizers, antiozonants, metal deactivators, processing assistants, endblock-reinforcing resins, plasticizing agents, fillers, color pigments, dyes and/or optical brighteners.

## Revendications

1. Bande de feuille adhésive, simple face ou double face, qui peut être détachée par étirement avec allongement dans le plan de collage, contenant une masse auto-adhésive, contenant
a) un copolymère à blocs
b) une résine adhésive
c) un antioxydant
avec une teneur en
d) phénol à un ou plusieurs noyaux, stériquement encombré, qui contient un groupement benzylthioéther en position ortho et/ou para par rapport au groupe phénolique OH et/ou
e) phénol stériquement encombré, qui présente un groupe ester phénylique de l'acide acrylique en position ortho et/ou para par rapport au groupe phénolique OH et/ou
f) lactone stériquement encombrée.

2. Utilisation selon la revendication 1, **caractérisée en ce que** le phénol à un et/ou plusieurs noyaux d) est le 4,4-bis(alkylthiométhyl)-o-crésol, de préférence le 4,6-bis(octylthiométhyl)-o-crésol ou le 4,6-bis(dodécylthiométhyl)-o-crésol.

3. Utilisation selon la revendication 1, **caractérisée en ce que** le phénol e) est l'acrylate de 2-tert-butyl-6-(3-tert-butyl-2-hydroxy-5-méthylbenzyl)-4-méthoxyphényle ou l'acrylate phénylique de 2-[1-(2-hydroxy-3,5-di-tert-pentylphényl)éthyl]-4,6-di-tert-pentyle.

4. Utilisation selon la revendication 1, **caractérisée en ce que** la lactone f) est un composé substitué présentant la structure de base 3-phényl-3H-benzofurann-2-one, en particulier le produit de réaction de la 3-hydroxy-5,7-di-tert-butyl-furann-2-one avec de l'o-xylène.

5. Utilisation selon l'une quelconque des revendications 1 à 4, **caractérisée en ce que** les composants d), e) et f) se trouvent ensemble en une quantité de 0,01 à 3,0 parties en poids par rapport à 100 parties en poids de la masse auto-adhésive totale, en particulier de 0,02 à 1,0.

6. Utilisation selon l'une quelconque des revendications 1 à 5, **caractérisée en ce que** le copolymère à blocs a) est présent en une quantité de 30 à 65, en particulier de 35 à 60, la résine adhésive b) de 35 à 70, en particulier de 40 à 65, et l'antioxydant c) de 0 à 2,5, en particulier de 0,05 à 1,5, en parties en poids par rapport à 100 parties en poids de la masse auto-adhésive totale.

7. Utilisation selon l'une quelconque des revendications 1 à 6, **caractérisée en ce que** le copolymère à blocs a) contient des blocs polymères formés par des aromatiques de vinyle (blocs A), en particulier de styrène, et des blocs polymères formés par polymérisation de 1,3-diènes (blocs D), en particulier de butadiène et/ou d'isoprène et/ou leurs produits d'hydrogénation.

8. Utilisation selon l'une quelconque des revendications 1 à 7, **caractérisée en ce que** l'antioxydant c) est un antioxydant primaire et/ou secondaire, en particulier un phénol stériquement encombré présentant un groupe acide 3-(p-hydroxyphényl)-propionique ou un groupe acide 3-(o-hydroxyphényl)-propionique.

9. Utilisation selon l'une quelconque des revendications 1 à 8, **caractérisée en ce que** la masse auto-adhésive contient d'autres additifs, en particulier des agents de protection contre la lumière, des agents anti-ozone, des désactivateurs de métaux, des adjuvants de transformation, des résines renforçant les blocs terminaux, des plastifiants, des charges, des pigments colorés, des colorants et/ou des azurants optiques.
